# EUROPÄISCHE PATENTANMELDUNG

(11) **EP 0 733 907 A1**
(43) Veröffentlichungstag der Anmeldung: **25.09.1996**
(21) Anmeldenummer: 95118439.9
(22) Anmeldetag: 23.11.1995
(51) Int. Cl.: G01P 3/66

(54) **Vorrichtung zur Messung der Geschoss-Geschwindigkeit an der Mündung von Geschützen hoher Kadenz**

(30) Priorität: 21.03.1995 CH 800/95
(71) Anmelder: Oerlikon-Contraves AG, CH-8050 Zürich (CH)
(72) Erfinder: Greuter, André, CH-8046 Zürich (CH)

(57) **Zusammenfassung**

Bei dieser Vorrichtung wird eine gegenseitige Beeinflussung der beiden Ringspulen weitgehend vermieden, wobei die Linien gleicher Induktion symmetrisch zu den Spulenmittelebenen verlaufen, so dass eine präzise, von der Form und vom Aufbau des Geschosses unabhängige Messung gewährleistet ist. Zu diesem Zweck ist jede Ringspule (**3**) zwecks Führung des magnetischen Feldes von einem aus ferro- oder ferrimagnetischem Material bestehenden u-förmigem Ringkörper (**4**) umschlossen. Der u-förmige Ringkörper (**4**) ist gegen eine verlängerte Rohrachse (**5**) des Geschützes hin magnetisch offen und symmetrisch zu einer Spulenmittelebene (**6**) angeordnet. Die der verlängerten Rohrachse (**5**) zugekehrten Ringflächen (**4.1**, **4.2**), die jeweils einen Schenkel der u-förmigen Ringkörper (**4**) abschliessen, sind nach innen zu den Ringspulen (**3**) hin um einen bestimmten Winkel zur Rohrachse (**5**) geneigt. Gemäss einer Weiterbildung weist jede Ringspule (**3**) einen aus ferromagnetischem Material bestehenden ersten u-förmigen Abschirmring (**7**) auf, der bezüglich der Spulenmittelebenen (**6**) symmetrisch angeordnet ist und mit einem Abstand den u-förmigen Ringkörper (**4**) umschliesst.

Ein ebenfalls aus ferromagnetischem Material bestehender zweiter u-förmiger Abschirmring (**8**) erstreckt sich über die zwei ersten Abschirmringe (**7**) und weist in der Mitte mindestens eine Trennwand (**8.1**) auf. Der zweite Abschirmring (**8**) ist symmetrisch zu einer Mittelebene der Messbasis angeordnet und umschliesst mit einem Abstand die beiden ersten Abschirmringe (**7**).

## Beschreibung

Die Erfindung betrifft eine Vorrichtung zur Messung der Geschossgeschwindigkeit an der Mündung von Geschützen hoher Kadenz, wobei zwei in einem bestimmten Abstand voneinander an einem Tragrohr angeordnete, von konstantem Strom durchflossene Ringspulen vorgesehen sind, die mit einer Auswerteelektronik in Verbindung stehen.

Es sind verschiedene Verfahren bzw. Vorrichtungen zur externen Messung der Geschwindigkeit eines Objektes bekannt und gebräuchlich. Zur Messung der Mündungsgeschwindigkeit von Geschossen eines Geschützes hoher Kadenz, ganz besonders eines Mehrlingsgeschützes, sind jedoch nur wenige brauchbar. Hier ist eine Messung ohnehin nur in Mündungsnähe möglich, weil sonst in den meisten Fällen ein nur mit viel Aufwand lösbares Identifikationsproblem entsteht. Diese Forderung wird noch durch die Tatsache unterstrichen, dass eine Programmierung eines Geschosses mit einfachen Mitteln nur sehr nahe der Mündung möglich ist.

Sie wird noch verschärft, falls wie bei der beispielsweise nachstehend beschriebenen Anwendung, vor der individuellen Programmierung jedes Geschosses, dessen Geschwindigkeit bestimmt werden soll. Die Verhältnisse an der Mündung eines Geschützes hoher Kadenz sind bezüglich Druck, Temperatur, Rauch, Verbrennungsrückstände, Lichterscheinungen und der Korrosivität der Gase extrem. Es gibt deshalb nur wenige Messverfahren, die diesen Umweltbedingungen standhalten, allen voran das magnetische. Dessen Hauptnachteile liegen darin begründet, dass die magnetischen Feldlinien stets in sich geschlossen sind und sich nur schwer bündeln lassen, und dass es mit Ausnahme bei Supraleitern keine magnetischen Isolatoren gibt.

Wie vorstehend bereits angedeutet, können aufgrund der Messdaten derartiger Vorrichtungen z.B. in Geschossen zur Abwehr von kleinen Lenkwaffen hoher Geschwindigkeit eingebaute hochpräzise Zünder so programmiert werden, dass eine grosse Anzahl in solchen Geschossen mitgeführter Subprojektile in einem genau definierten optimalen Zündzeitpunkt ausgestossen werden. Wie aus einer Druckschrift **OC 2057 d 94** der Firma Oerlikon-Contraves, Zürich, bekannt, erfolgt die Programmierung des Zünders unmittelbar nach dem Verlassen der Geschützmündung. Dies bringt den Vorteil, dass das Zeitintervall, für das die Flugbahn des abzuwehrenden Objektes extrapoliert werden muss, minimal wird. Zusätzlich bietet diese Version die Möglichkeit, dem Geschoss die Tempierung, berechnet aufgrund der tatsächlich gemessenen Mündungsgeschwindigkeit, zu übergeben. An die Präzision eines solchen Messverfahrens, das auf einer kurzen Wegstrecke unmittelbar ausserhalb der Mündung arbeitet, werden hohe Anforderungen gestellt. Die Forderungen liegen bei Luftabwehrsystemen im Bereich von 1 bis 3 Promillen. Die eigentliche Messbasis muss nahe der Mündung angebracht sein und darf nur eine geringe Länge aufweisen, weil bei Treibspiegelmunition ein konisch sich öffnender Freiraum für die seitlich wegfliegenden Führungselemente (Sabots) vorhanden sein muss.

Eine geringe Länge und Mündungsnähe sind auch deshalb erforderlich, weil die mit dem Geschützrohr starr verbundene Messanordnung die Eigenfrequenzen der Biegeschwingungen des Geschützrohres umso mehr senkt, je grösser diese Masse und je weiter von der Geschützmündung entfernt ihr Schwerpunkt ist. Bei bestehenden, festigkeitsmässig korrekt ausgelegten (d.h. möglichst leichten) Rohren kann dies unter Umständen beim nachträglichen Anbringen zu einer Vergrösserung der Waffenstreuung führen.

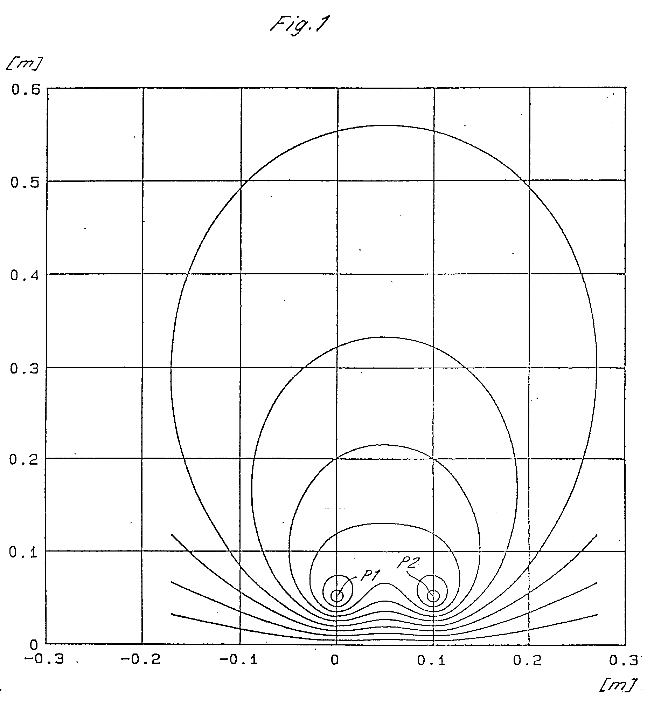

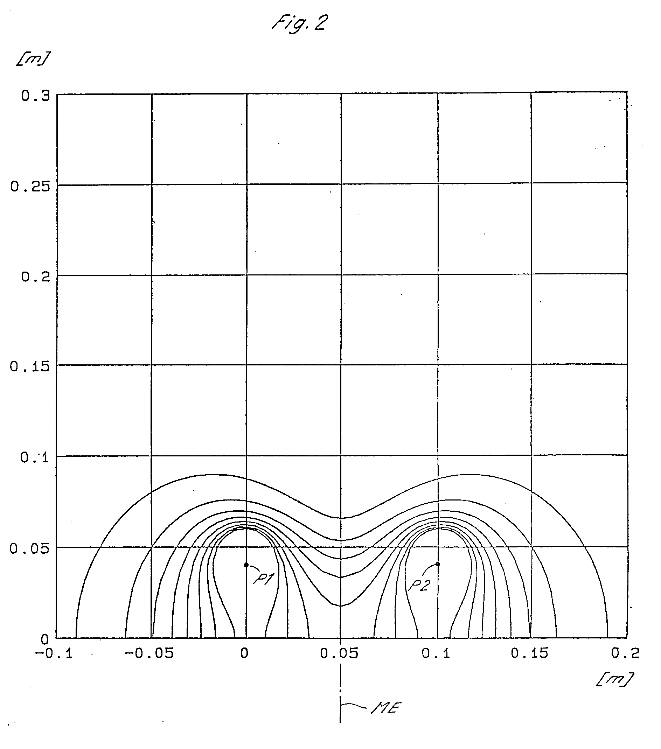

Bei einer mit der **EP-A 0 108 973** bekannt gewordenen Vorrichtung gemäss Oberbegriff, bei der die Messung der Geschossgeschwindigkeit auf der Veränderung des magnetischen Feldes zweier in einem bestimmten Abstand voneinander angeordneter, magnetisch offener Ringspulen beim Geschossdurchgang beruht, ist nachteilig, dass sich die beiden Ringspulen, die den Geschosskanal in einigem Abstand umschliessen, gegenseitig beeinflussen (**Fig. 1**), wobei die Linien gleicher Induktion derart verlaufen (**Fig. 2**), dass sich der Einfluss von Form und Aufbau eines Geschosses auf die Genauigkeit der Messung nachteilig auswirken kann.

Der geringe Abstand von der Mündung des aus ferromagnetischem Material gefertigten Geschützrohres verformt die Feldverteilung zusätzlich. Dadurch wird die Messpräzision in nicht tragbarer Weise beeinflusst. Prinzipiell kann der Abstand der Ringspulen voneinander durch ein Eichschiessen festgestellt und bei der Geschwindigkeitsberechnung berücksichtigt werden. Die Schwierigkeit besteht jedoch darin, dass diese Eichung für jeden Geschosstyp durchgeführt werden muss und je nach der zufälligen Magnetisierung von Geschoss und Mündung um mehrere Prozente abweichen kann. Bei der zufälligen Magnetisierung ist typisch, dass sie im Verlauf des Schiessens ständig ändert. Dies ist auf die hohe Beanspruchung des zumeist aus ferromagnetischem Material gefertigten Rohres bei der Schussabgabe und auf die hohen Temperaturen an der Mündung zurückzuführen.

Eine weitere nachteilige Verzerrung des Feldverlaufes wird durch äussere Magnetfelder, z.B. durch das durch die ferromagnetischen Teile des Geschützrohres und dessen Führungsteile gebündelte Erdfeld, durch eine bei der Bearbeitung oder Montage zufällig erfolgte Magnetisierung des Rohres oder der Geschosse bewirkt. Bei den herkömmlichen Messsystemen mit offenen (Luft-) Spulen entstehen dabei grosse, nicht prädiktierbare Messfehler, die zudem von Munitionstyp zu Munitionstyp verschieden sind und die auch mit einem Eichschiessen nicht ausreichend und zuverlässig korrigiert werden können.

Der Erfindung liegt die Aufgabe zugrunde eine Vorrichtung der eingangs genannten Art vorzuschlagen, die vorstehend erwähnte Nachteile nicht aufweist, und bei der zwecks Erreichen einer hohen Messgenauigkeit insbesondere die gegenseitige Beeinflussung der beiden Spulen sowie der Einfluss des Geschützrohres und Geschosses vermieden werden.

Diese Aufgabe wird durch die im Patentanspruch **1** angegebene Erfindung gelöst. Hierbei ist jede Ringspule zwecks Führung des magnetischen Feldes von einem aus ferro- oder ferrimagnetischem Material bestehenden u-förmigem Ringkörper umschlossen. Der u-förmige Ringkörper ist gegen eine verlängerte Rohrachse des Geschützes hin magnetisch offen und symmetrisch zu einer Spulenmittelebene angeordnet.

Nach einer besonderen Ausführung sind die der verlängerten Rohrachse zugekehrten Ringflächen, die jeweils einen Schenkel der u-förmigen Ringkörper abschliessen, nach innen zu den Ringspulen hin um einen bestimmten Winkel zur Rohrachse geneigt.

Gemäss einer vorteilhatten Weiterbildung der Erfindung weist jede Ringspule einen aus ferromagnetischem Material bestehenden ersten u-förmigen Abschirmring auf, der bezüglich der Spulenmittelebenen symmetrisch angeordnet ist und mit einem Abstand den u-förmigen Ringkörper umschliesst. Ein ebenfalls aus ferromagnetischem Material bestehender zweiter u-förmiger Abschirmring erstreckt sich über die zwei ersten Abschirmringe und weist in der Mitte mindestens eine Trennwand auf. Der zweite Abschirmring ist symmetrisch zu einer Mittelebene der Messbasis angeordnet und umschliesst mit einem Abstand die beiden ersten Abschirmringe, wobei die eine Spule und den zugehörigen ersten Abschirmring umschliessenden Hälften des zweiten Abschirmringes zusätzlich symmetrisch bezüglich der zugeordneten Spulenmittelebene sind.

Die mit der Erfindung erzielten Vorteile sind darin zu sehen, dass durch die vorgeschlagene Feldführung eine gegenseitige Beeinflussung der beiden Spulen weitgehend vermieden wird und die Linien gleicher Induktion symmetrisch zu den Spulenmittelebenen verlaufen, so dass eine präzise, von der Form und vom Aufbau des Geschosses unabhängige Messung gewährleistet ist. Durch die besondere Formgebung der erfindungsgemässen u-förmigen Ringkörper wird das Feld jeder Spule zusammengefasst und radial ausgerichtet, wobei der Einfluss einer Rohrmagnetisierung oder einer Magnetisierung des Geschosses auf den Messvorgeng verringert wird. Mittels der Abschirmungen kann die Trennung der Felder weiter verbessert und die Empfindlichkeit gegenüber externen Feldern reduziert werden.

Die erfindungsgemässe Vorrichtung macht es möglich, die Feldverzerrungen soweit zu reduzieren, dass mit einer relativ kleinen Messbasis bzw. keinem Abstand der beiden Ringspulen zueinander praktisch brauchbare Abmessungen und die geforderte Messgenauigkeit erreicht werden können.

Im folgenden wird die Erfindung anhand mehrerer Ausführungsbeispiele im Zusammenhang mit der Zeichnung näher erläutert. Es zeigen:
- **Fig. 1**: ein Diagramm des Verlaufes der magnetischen Feldlinien zweier benachbarter Spulen bei einer Vorrichtung gemäss Stand der Technik,
- **Fig. 2**: ein Diagramm des Verlaufes der Linien gleicher Induktion zweier benachbarter Spulen der Vorrichtung gemäss Stand der Technik,
- **Fig. 3**: einen Längsschnitt einer ersten Ausführung der erfindungsgemässen Vorrichtung in schematischer Darstellung,
- **Fig. 4**: einen Längsschnitt einer zweiten Ausführung der Vorrichtung in schematischer Darstellung,
- **Fig. 5**: einen Längsschnitt einer dritten Ausführung der Vorrichtung in schematischer Darstellung,
- **Fig. 6**: einen Querschnitt einer Ausführung einer Spuleneinheit,
- **Fig. 7**: einen Längsschnitt der Vorrichtung mit der Spuleneinheit gemäss **Fig. 6**.

In der **Fig. 1** ist die Abszisse einer verlängerten Rohrachse eines Geschützes und die Ordinate radialen Abständen von der Rohrachse aus zugeordnet. Die Abszisse und Ordinate sind in Abstände gleicher Länge von z.B. 0,1 m eingeteilt. Mit **P1** und **P2** sind die Mittelpunkte zweier gleichsinnig gepolter Ringspulen bezeichnet, die in dem vorstehend definierten Abstand (auch Messbasis oder Messstrecke genannt) nebeneinander angeordnet sind. Wie aus dem Diagramm ersichtlich, bleibt ein grosser Teil der in einer die verlängerte Rohrachse enthaltenden Ebene verlaufenden Feldlinien nicht auf die unmittelbare Umgebung jeder einzelnen Spule beschränkt, wie dies eine genaue Messung eigentlich erfordert, sondern umfasst beide Spulen.
Beim dargestellten Feldlinienverlauf ist der Einfluss der Mündung des Geschützrohres nicht berücksichtigt.

Gemäss **Fig. 2** ist die Abszisse der verlängerten Rohrachse eines Geschützes und die Ordinate den radialen Abständen von der Rohrachse aus zugeordnet. Die Abszisse und Ordinate sind in Abstände gleicher Länge von z.B. 0,05 m eingeteilt. Die Mittelpunkte **P1** und **P2** der beiden Ringspulen sind im doppelten vorstehend definierten Abstand nebeneinander angeordnet, wobei der doppelte Abstand die Messbasis bildet. Wie aus dem Diagramm ersichtlich, verlaufen die Linien gleicher Induktion symmetrisch zu einer Mittelebene **ME** der Messbasis, so dass eine präzise, von der Form und vom Aufbau eines Geschosses unabhängige Messung nicht gewährleistet ist. Beim dargestellten Verlauf der Linien gleicher Induktion ist der Einfluss der Mündung des Geschützrohres nicht berücksichtigt.

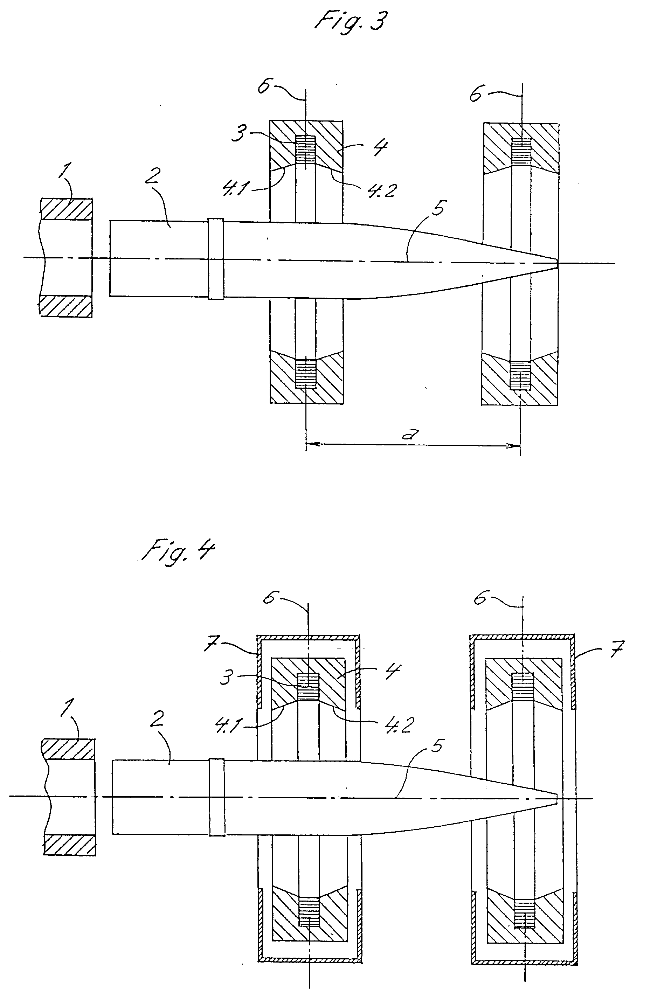

In der **Fig. 3** ist mit **1** die Mündung eines Geschützrohres und mit **2** ein Geschoss im Augenblick des Abschusses bezeichnet. Nahe der Mündung **1** sind zwei in einem bestimmten Abstand a voneinander angeordnete Ringspulen **3** vorgesehen, wobei der bestimmte Abstand **a** die Messbasis darstellt und beispielsweise 18 cm beträgt. Jede Ringspule **3** ist zwecks Führung des magnetischen Feldes von einem aus ferro- oder ferrimagnetischem Material mit relativ hohem spezifischen Widerstand bestehenden u-förmigen Ringkörper **4** umschlossen, der gegen eine verlängerte Rohrachse **5** des Geschützes hin magnetisch offen und symmetrisch zu einer senkrecht zur verlängerten Rohrachse **5** verlaufenden, und durch eine strichpunktierte Linie symbolisierte Spulenmittelebene **6** angeordnet ist.

Die der verlängerten Rohrachse **5** zugekehrten Ringflächen **4.1**, **4.2**, die jeweils einen Schenkel der u-förmigen Ringkörper **4** abschliessen, sind nach innen zu den Ringspulen **3** hin um einen bestimmten Winkel zur verlängerten Rohrachse **5** geneigt, wobei der Winkel in einer bevorzugten Ausführung 14° beträgt. Die u-förmigen Ringkörper **4** und die Ringspulen **3** sind wie nachstehend anhand der **Fig. 7** näher beschrieben mittels einer Halterung konzentrisch zur verlängerten Rohrachse **5** am Geschützrohr befestigt.

Anstatt geneigt können die Ringflächen **4.1**, **4.2**, die jeweils einen Schenke der Ringkörper **4** abschliessen, parallel zur verlängerten Rohrachse **5** verlaufen. Es ist auch möglich, Ringkörper **4** aus weichmagnetischem, ferro- oder ferrimagnetischem Material, das eine geringe spezifische elektrische Leitfähigkeit aufweist, zu verwenden. Weiterhin können die Ringkörper **4** zur Unterdrückung der das Messignal dämpfenden Wirkung der Wirbelströme an einer Stelle ihres Umfanges mit einem durchgehenden radialen Trennschlitz versehen sein. In diesem Fall müssen die Ringkörper **4** mit einer Isolationsschicht überzogen oder mit einer dielektrischen Einlage von der Halterung (**Fig. 7**) elektrisch getrennt werden.

Mit den vorstehend beschriebenen u-förmigen Ringkörpern **4** kann das beim Fliessen eines konstanten Stromes aufgebaute magnetische Feld jeder Ringspule **3** zusammengefasst und dank der besonderen Formgebung der Ringkörper **4** dessen Verteilung in radialer Richtung gesteuert werden. Die Dicke und die Neigung der Ringflächen **4.1**, **4.2** der beiden Schenkel jedes Ringkörpers **4** sind hierbei so gewählt, dass der resultierende Feldverlauf in radialer Richtung die optimale Tiefe aufweist. Mit diesen Massnahmen wird erreicht, dass die Linien gleicher Induktion symmetrisch zu den Spulenmittelebenen **6** verlaufen, womit die anhand der **Fig. 1** und **2** beschriebenen Nachteile vermieden werden und eine präzisere Messung möglich wird. Gleichzeitig wird der Einfluss einer Rohrmagnetisierung oder einer Magnetisierung des Geschosses verringert. Bei der Ermittlung der optimalen Tiefe des resultierenden Feldverlaufes muss berücksichtigt werden, dass bei zu geringer Tiefe die Lage zwar besser definiert, dafür aber das Messignal zu klein ist. Wird die Tiefe zu gross gewählt, so erhöht sich die noch verbleibende Kopplung zwischen den Ringspulen **3** in unnötiger Weise, wodurch die Lage schlechter definiert und dafür das Messignal grösser ist.

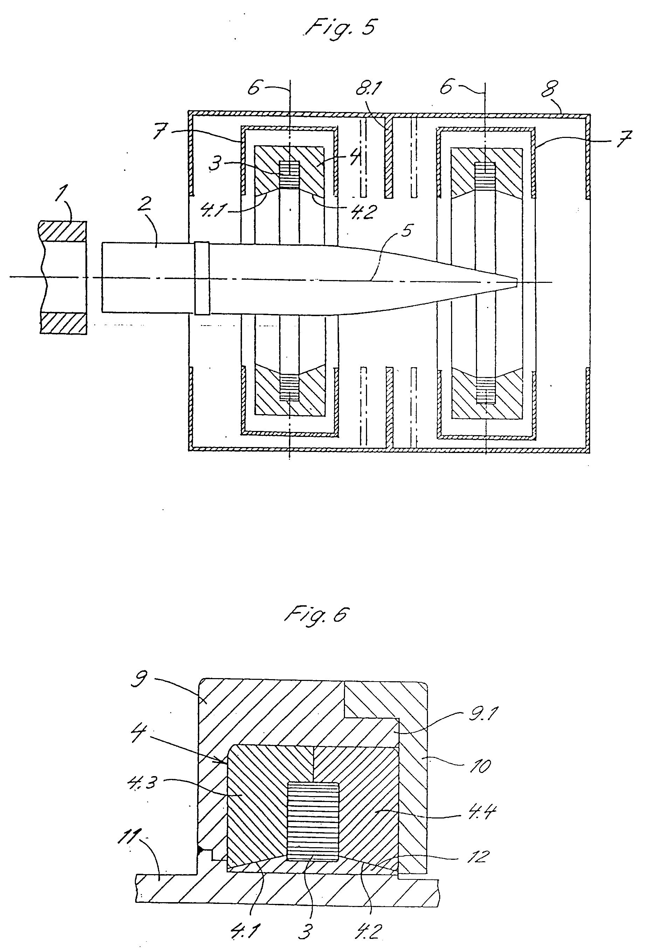

Nach **Fig. 4** ist für jede Ringspule **3** ein aus ferromagnetischem Material bestehender erster u-förmiger Abschirmring **7** vorgesehen, der wie weiter nicht dargestellt und beschrieben aus mindestens zwei Teilen zusammengesetzt sein kann. Die ersten Abschirmringe **7** sind bezüglich der Spulenmittelebenen **6** symmetrisch angeordnet und umschliessen mit einem Abstand die u-förmigen Ringkörper **4**.

Gemäss **Fig. 5** ist ein aus ferromagnetischem Material bestehender zweiter u-förmiger Abschirmring **8** vorgesehen, der sich über die zwei ersten Abschirmringe **7** erstreckt. Der zweite u-förmige Abschirmring **8** weist in der Mitte eine Trennwand **8.1** auf, ist symmetrisch zur Mittelebene ME der Messbasis angeordnet und umschliesst in einem Abstand die beiden ersten Abschirmringe **7**, wobei die Symmetrie der durch die Trennwand **8.1** gegebenen Hälften der zweiten Abschirmringe **8** zu den Spulenmittelebenen **6** gewahrt bleibt. Bei grösseren Spulenabständen ist es vorteilhafter anstelle der einen Trennwand **8.1** unter Einhaltung der vorstehend erwähnten Symmetrieforderungen zwei Trennwände (strichpunktiert gezeichnet) vorzusehen. Der zweite Abschirmring **8** kann wie nicht weiter dargestellt und beschrieben aus mehreren Teilen zusammengesetzt sein.

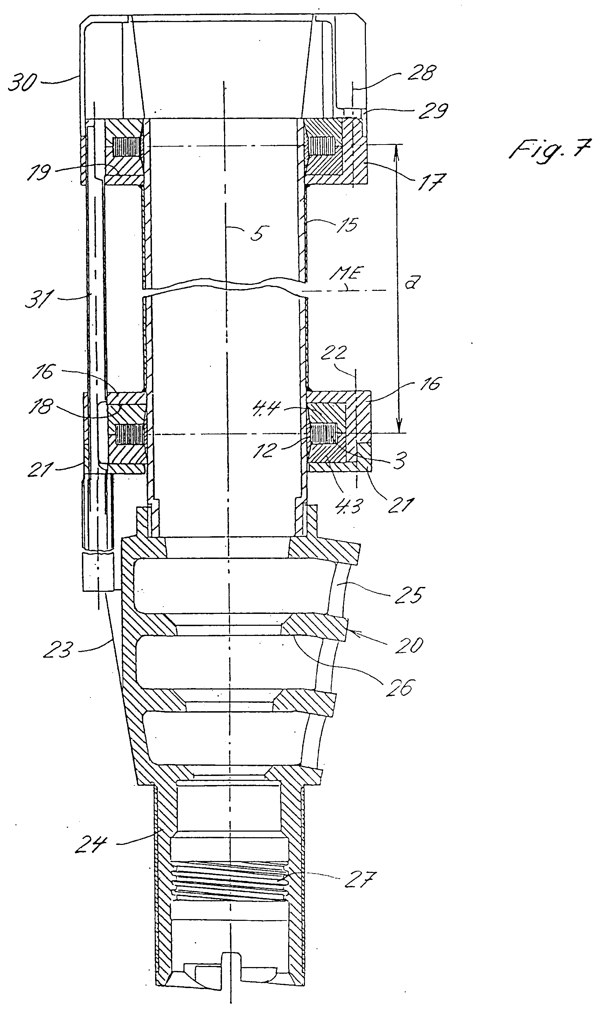

Wie aus der **Fig. 6** ersichtlich sind die u-förmigen Ringkörper **4** in der Spulenmittelebene **6** in zwei gleiche Ringkörperhälften **4.3**, **4.4** unterteilt, die mittels z.B. durch Verschrauben miteinander verbundene Halteringe **9**, **10** zusammengehalten werden. Der erste Haltering **9** ist beispielsweise durch Verschweissen an einen Träger **11** der Halterung befestigt und mit einem zylindrischen Ansatz **9.1** versehen, auf dem der zweite Haltering **10** geführt ist. Der u-förmige Ringkörper **4** und die Ringspule **3** sind gegen die verlängerte Rohrachse **5** hin gegen mechanische Einwirkungen durch einen Ring **12** geschützt, der aus einem nicht magnetisierbaren Material mit relativ geringer elektrischer Leitfähigkeit oder aus einem Dielektrikum besteht. Der Ring **12** ist von gleicher Breite wie die u-förmigen Ringkörper **4** und weist im Querschnitt ein Aussenprofil auf, das dem Innenprofil der u-förmigen Ringkörper **4** bei eingesetzten Ringspulen **3** entspricht. Der Ring **12** dient gleichzeitig als Stützkörper bei der Herstellung der Ringspule und erleichtert deren Montage.

In der **Fig. 7** ist mit **15** ein Tragrohr bezeichnet, an dem Flansche **16**, **17** befestigt sind, wobei der erste Flansch **16** unter Einhaltung eines axialen Abstandes an dem einen Ende des Tragrohres **15** und der zweite Flansch **17** unmittelbar an dem anderen Ende des Tragrohres **15** angeordnet ist. Die Flansche **16**, **17** sind jeweils auf den der Mittelebene **ME** der Messbasis a zugekehrten Seiten, ähnlich wie in der **Fig. 6** dargestellt, an scheibenförmigen Ansätzen des Tragrohres **15** angeschweisst. Die Flansche **16**, **17** weisen Vertiefungen **18**, **19** auf, in welche die Ringkörperhälften **4.3**, **4.4** mit den Ringspulen **3** und dem Ring **12** eingesetzt sind, wobei sie im ersten Flansch **16** durch einen Haltering **21** gehalten werden, der mittels durch strichpunktierte Linien symbolisierte Schrauben **22** mit diesem verbunden ist. Der Haltering **21** ist hierbei so dimensioniert, dass er durch einen kleinen radialen Spalt vom Tragrohr **15** getrennt ist. Dadurch wird verhindert, dass während des Schiessens namhafte Teile des dynamischen Kraftflusses über die Ringkörperhälften **4.3**, **4.4** sowie die Ringspule **3** geleitet werden. Das eine Ende des Tragrohres **15** ist über ein Gewinde, das nicht vollständig angezogen wird, sondern in einer definierten Stellung in bekannter Weise (z.B. durch in ein oder mehrere Querlöcher gesteckte Stifte oder Schrauben) winkelmässig arretiert wird, mit einem Bremsteil **20** verbunden. Das Bremsteil **20** weist einen konischen Teil **23** und einen zylindrischen Teil **24** auf. Der konische Teil **23** ist als Mündunsgbremse ausgebildet und weist zu diesem Zweck radiale Oeffnungen **25** und Prallplatten **26** auf. Betreffend die Wirkungsweise der Mündungsbremse wird auf die bereits genannte **EP-A 0 108 973** hin-gewiesen. Der zylindrische Teil **24** ist mit einem Innengewinde **27** versehen, so dass das Bremsteil **20** und damit auch das Tragrohr **15** am Geschützrohr befestigt werden kann. Der zweite Flansch **17** ist zwecks Festhaltung der Spulenanordnung **3**, **4.3**, **4.4**, **12** mittels durch strichpunktierte Linien symbolisierte Schrauben **28** mit einem Befestigungsflansch **29** verbunden, der gegebenenfalls mit einem Programmierte **30** verbunden sein kann, dessen allgemeine Bedeutung aus der eingangs zitierten Druckschrift **OC 2057 d 94** ersichtlich ist. Bei der Festhaltung der Spulenanordnung **3**, **4.3**, **4.4**, **12** sowohl am ersten als auch am zweiten Flansch **16**, **17** ist wesentlich, dass der dynamische Kraftfluss hauptsächlich vom Tragrohr **15** aufgenommen und nicht über die Ringkörperhälften **4.3**, **4.4** und die Ringspule **3** geleitet wird. Dies hat den Vorteil, dass das Verhältnis von Nutzsignal zu dem durch Mlkrophonie über den Magnetostriktionseffekt erzeugten Störsignal gross gehalten werden kann.

Die vorstehend beschriebene Vorrichtung arbeitet wie folgt:
Beim Durchgang des Gechosses **2** durch die beiden Ringspulen **3** wird aufgrund der dabei auftretenden Änderung des magnetischen Flusses kurz hintereinander in jeder Ringspule **3** ein Impuls erzeugt. Die Impulse werden einer Auswerteelektronik zugeführt, in welcher aus dem zeitlichen Abstand der Impulse voneinander und der Länge der Messbasis die Geschossgeschwindigkeit errechnet wird. Aus der Geschossgeschwindigkeit und einem anderweitig ermittelten Abstand zu einem abzuwehrenden Objekt wird ein Zeitwert gebildet, der wie auch aus der eingangs erwähnten Druckschrift **OC 2057 d 94** bekannt, einer Programmierspule für die Programmierung eines im Geschoss **2** eingebauten Zünders zugeführt wird.

### Bezugszeichenliste

- 1: Mündung
- 2: Geschoss
- 3: Ringspulen
- 4: U-förmige Ringkörper
- 4.1: Ringfläche
- 4.2: Ringfläche
- 4.3: Ringkörperhälfte
- 4.4: Ringkörperhälfte
- 5: Verlängerte Rohrachse
- 6: Spulenmittelebenen
- 7: Erste u-förmige Abschirmringe
- 8: Zweiter u-förmiger Abschirmring
- 8.1: Trennwand
- 9: Erster Haltering
- 9.1: Zylindrischer Ansatz
- 10: Zweiter Haltering
- 11: Träger
- 12: Ring
- 15: Tragrohr
- 16: Erster Flansch
- 17: Zweiter Flansch
- 18: Vertiefung
- 19: Vertiefung
- 20: Bremsteil
- 21: Haltering
- 22: Schrauben
- 23: Konischer Teil
- 24: Zylindrischer Teil
- 25: Radiale Öffnungen
- 26: Prallplatten
- 27: Innengewinde
- 28: Schrauben
- 29: Befestigungsflansch
- 30: Programmierteil
- 31: Rohr
- P1: Mittelpunkt
- P2: Mittelpunkt
- ME: Mittelebene
- a: Abstand (Messbasis)

## Patentansprüche

1. Vorrichtung zur Messung der Geschossgeschwindigkeit an der Mündung von Geschützen hoher Kadenz, wobei zwei in einem bestimmten Abstand (**a**) voneinander an einem Tragrohr (**15**, **47**) angeordnete, von konstantem Strom durchflossene Ringspulen (**3**) vorgesehen sind, die mit einer Auswerteelektronik in Verbindung stehen,
**dadurch gekennzeichnet**,
dass jede Ringspule (**3**) zwecks Führung des magnetischen Feldes von einem aus ferro- oder ferrimagnetischem Material bestehenden u-förmigen Ringkörper (**4,**) umschlossen ist, der gegen eine verlängerte Rohrachse (**5**) des Geschützes hin magnetisch offen und symmetrisch zu einer Spulenmittelebene (**6**) angeordnet ist.

2. Vorrichtung nach Anspruch **1**,
**dadurch gekennzeichnet**,
dass der u-förmige Ringkörper (**4**) aus einem Stück besteht oder aus mehreren Teilen zusammengesetzt ist.

3. Vorrichtung nach Anspruch **2**,
**dadurch gekennzeichnet**,
dass der verlängerten Rohrachse (**5**) zugekehrte Ringflächen (**4.1**, **4.2**), die jeweils einen Schenke des u-förmigen Ringkörpers (**4**) abschliessen, parallel zur verlängerten Rohrachse (**5**) verlaufen.

4. Vorrichtung nach Anspruch **2**,
**dadurch gekennzeichnet**,
dass der verlängerten Rohrachse (**5**) zugekehrte Ringflächen (**4.1**, **4.2**), die jeweils einen Schenkel des u-förmigen Ringkörpers (**4**) abschliessen, nach innen zu den Ringspulen (**3**) hin um einen bestimmten Winkel zur verlängerten Rohrachse (**5**) geneigt sind.

5. Vorrichtung nach Anspruch **4**,
**dadurch gekennzeichnet**,
dass die Ringflächen (**4.1**, **4.2**) um einen Winkel von 14° geneigt sind.

6. Vorrichtung nach Anspruch **4**,
**dadurch gekennzeichnet**
dass der u-förmige Ringkörper (**4**) in der Spulenmittelebene (**6**) in zwei gleiche Ringkörperhälften (**4.3**, **4.4**) unterteilt ist.

7. Vorrichtung nach Anspruch **1**,
**dadurch gekennzeichnet**,
dass der u-förmige Ringkörper (**4**) aus weichmagnetischem, ferro- oder ferrimagnetischem Material besteht, das eine geringe spezifische elektrische Leitfähigkeit aufweist.

8. Vorrichtung nach Anspruch **1**,
**dadurch gekennzeichnet**,
dass der u-förmige Ringkörper (**4**) an einer Stelle seines Umfanges durch einen radialen Schlitz geteilt und gegen umgebende leitende Teile isoliert ist.

9. Vorrichtung nach Anspruch **1**,
**dadurch gekennzeichnet**,
dass der u-förmige Ringkörper (**4**) und die Ringspule (**3**) gegen die verlängerte Rohrachse (**5**) hin gegen mechanische Einwirkungen durch einen Ring (**12**) geschützt sind, der aus einem nicht magnetisierbaren Material mit relativ geringer elektrischer Leitfähigkeit oder aus einem Dielektrikum besteht, und der bei gleicher Breite wie der u-förmige Ringkörper (**4**) im Querschnitt ein Aussenprofil aufweist, das dem Innenprofil des u-förmigen Ringkörpers (**4**) bei eingesetzter Ringspule (**3**) entspricht.

10. Vorrichtung nach Anspruch **1**,
**dadurch gekennzeichnet**,
dass für jede Ringspule (**3**) ein aus ferromagnetischem Material bestehender erster u-förmiger Abschirmring (**7**) vorgesehen ist, der symmetrisch zur Spulenmittelebene (**6**) angeordnet ist und mit einem Abstand den u-förmigen Ringkörper (**4**) umschliesst.

11. Vorrichtung nach Anspruch **10**,
**dadurch gekennzeichnet**,
dass ein aus ferromagnetischem Material bestehender zweiter u-förmiger Abschirmring (**8**) vorgesehen ist, der sich über die zwei ersten u-förmigen Abschirmringe (**7**) erstreckt und in der Mitte mindestens eine Trennwand (**8.1**) aufweist, und der symmetrisch zu einer Mittelebene (**ME**) der Messbasis (**a**) angeordnet ist und die beiden ersten Abschirmringe (**7**) mit einem Abstand umschliesst.

12. Vorrichtung nach Anspruch **11**,
**dadurch gekennzeichnet**,
dass die Trennwand bzw. Trennwände (**8.1**) so angeordnet sind, dass die Teile des zweiten u-förmigen Abschirmringes (**8**), die jeweils eine der beiden ersten u-förmigen Abschirmringe (**7**) in einem Abstand umschliessen, zusätzlich bezüglich der zugehörigen Spulenmittelebene (**6**) symmetrisch ausgebildet sind.

13. Vorrichtung nach Anspruch **1**,
**dadurch gekennzeichnet**,
dass der bestimmte Abstand (**a**) zwischen den beiden Ringspulen (**3**) 18 cm beträgt.

14. Vorrichtung nach Anspruch **1**,
**dadurch gekennzeichnet**,
dass das Tragrohr (**15**) mit einer an der Mündung (**1**) eines Geschützrohres befestigten Mündungsbremse (**23**, **25**, **26**) verbunden ist.

15. Vorrichtung nach Anspruch **14**,
**dadurch gekennzeichnet**, dass
- zwei Flansche (**16**, **17**) am Tragrohr (**15**) befestigt sind, wobei der erste Flansch (**16**) unter Einhaltung eines axialen Abstandes an dem einen Ende des Tragrohres (**15**) und der zweite Flansch (**17**) unmittelbar an dem anderen Ende des Tragrohres (**15**) angeordnet ist,
- die Flansche (**16**, **17**) jeweils auf den der Mittelebene (**ME**) der Messbasis (**a**) zugekehrten Seiten an scheibenförmigen Ansätzen des Tragrohres befestigt sind,
- die Flansche Vertiefungen (**18**, **19**) aufweisen, in welche die Ringkörperhälften (**4.3**, **4.4**) mit den Ringspulen (**3**) und dem Ring (**12**) eingesetzt sind, wobei sie im ersten Flansch (**16**) durch einen mit diesem verschraubten Haltering (**21**) gehalten werden, und
- der Haltering (**21**) hierbei so dimensioniert ist, dass er durch einen kleinen radialen Spalt vom Tragrohr (**15**) getrennt ist.

16. Vorrichtung nach Anspruch **15**,
**dadurch gekennzeichnet**,
dass das den ersten Flansch (**16**) tragende eine Ende des Tragrohres (**15**) über ein ein Gewinde, das nicht vollständig angezogen, sondern in einer definierten Stellung winkelmässig arretiert wird, mit der Mündungsbremse (**23**, **25**, **26**) verbunden ist.
